Europäisches Patentamt

European Patent Office

Office européen des brevets

(19)

(11) Numéro de publication : **0 314 533 B1**

(12) **FASCICULE DE BREVET EUROPEEN**

(45) Date de publication du fascicule du brevet :
25.03.92 Bulletin 92/13

(51) Int. Cl.⁵ : **H02K 19/36, H02K 11/00**

(21) Numéro de dépôt : **88402194.0**

(22) Date de dépôt : **31.08.88**

(54) **Rotor à enroulement inducteur pour machine dynamo-électrique notamment pour alternateur de véhicule automobile.**

(30) Priorité : **20.10.87 FR 8714417**

(43) Date de publication de la demande :
**03.05.89 Bulletin 89/18**

(45) Mention de la délivrance du brevet :
**25.03.92 Bulletin 92/13**

(84) Etats contractants désignés :
**DE ES IT**

(56) Documents cités :
**DE-A- 1 613 559
DE-A- 3 409 333
FR-A- 2 441 288
US-A- 4 535 377**

(73) Titulaire : **VALEO EQUIPEMENTS
ELECTRIQUES MOTEUR
2, Rue André Boulle
F-94000 Creteil (FR)**

(72) Inventeur : **Meuret, Jean-Pierre
13, rue Paul Verlaine
F-93130 Noisy le Sec (FR)**

(74) Mandataire : **Gamonal, Didier
Société VALEO Service Propriété Industrielle
30, rue Blanqui
F-93406 Saint Ouen (FR)**

EP 0 314 533 B1

Jouve, 18, rue Saint-Denis, 75001 PARIS

## Description

La présente invention concerne un rotor à enroulement inducteur pour machine dynamo-électrique notamment pour alternateur de véhicule automobile.

Les rotors d'alternateurs de véhicules automobiles sont généralement constitués d'un arbre, sur lequel est disposé un circuit magnétique généralement constitué d'un noyau magnétique de section circulaire, de part et d'autre et contre lequel sont disposées en vis à vis deux roues polaires à griffes. Les roues polaires à griffes sont décalées l'une par rapport à l'autre de manière à ce que leurs griffes s'imbriquent les unes dans les autres. Une bobine inductrice est disposée sur le noyau magnétique et entre les roues polaires à griffes, et est constituée d'un bobineau, le plus souvent réalisé par moulage de matière isolante, sur lequel est bobiné un enroulement inducteur.

Un collecteur de matière isolante est disposé sur l'arbre de la machine et porte deux bagues collectrices reliées chacune à une extrémité du fil constituant l'enroulement inducteur et sur chacune desquelles frotte un balai coulissant dans un porte-balais et permettent l'alimentation de l'enroulement inducteur.

Un stator à l'intérieur duquel tourne le rotor, est constitué généralement d'un empilage de tôles découpées comportant sur toute leur périphérie une pluralité d'encoches dans lesquelles est logé le bobinage statorique. Ce stator est pincé entre deux paliers, l'un avant et l'autre arrière, dans chacun desquels est logé un roulement à billes apte à recevoir chacun une extrémité de l'arbre du rotor. Le rotor est entraîné en rotation par le moteur à combustion interne du véhicule sur lequel est monté l'alternateur, par l'intermédiaire d'une courroie d'entraînement et grâce à une poulie montée en bout d'arbre, du côté du palier avant. Un porte-balais est fixé sur le palier arrière, lequel reçoit également un pont de diodes de redressement et éventuellement un régulateur de tension, l'ensemble étant recouvert d'un capot en matière isolante. La ventilation de l'ensemble est généralement réalisée par un ou plusieurs ventilateurs internes ou externes, selon la conception de l'alternateur.

Une diode de recirculation est montée en parallèle sur l'enroulement inducteur, et est généralement disposée à l'intérieur du régulateur. Cette diode de recirculation sert à assurer une continuité de la circulation du courant lors d'une coupure brusque du circuit inducteur évitant, ainsi, la formation d'un arc dans le cas d'une coupure mécanique ou d'une dissipation de puissance importante dans la jonction du composant électronique de coupure du circuit.

Cette diode de recirculation permet d'éviter des incidents lors de la coupure du circuit inducteur commandée par le régulateur, mais n'intervient pas lors des coupures du circuit intervenant entre les balais et les bagues collectrices.

En effet, de telles coupures peuvent se produire si l'ensemble collecteur/balais présente des défauts en particulier dus à un usinage imparfait, et c'est notamment le cas des bagues collectrices qui ne sont pas parfaitement circulaires, surtout lors d'une fabrication en grande série, comme par exemple dans l'industrie automobile.

L'ovalité des bagues collectrices, les chocs mécaniques accidentels, ou les défauts mécaniques, tels que par exemple un mauvais coulissement des balais dans le porte-balais peuvent, dans les cas extrêmes, provoquer des micro-coupures entre les balais et les bagues collectrices lors de la rotation de la machine, surtout lorsque celle-ci est entraînée à une grande vitesse.

On pallie partiellement à ces inconvénients en branchant la diode de circulation directement en parallèle sur l'enroulement inducteur comme il est illustré en particulier dans le document US-A-4 535 377.

Se pose alors la difficulté de l'implantation d'une telle diode, implantation qui doit satisfaire aux conditions de protection physique contre les agressions extérieures tout en n'augmentant pas le coût de l'ensemble de l'alternateur.

La présente invention résout ces problèmes et propose à cet effet un rotor de machine dynamo-électrique et notamment d'alternateur de véhicule automobile, généralement constitué d'un arbre sur lequel sont disposés, un noyau magnétique portant une bobine industrice, deux roues polaires à griffes disposées en vis-à-vis de chaque côté du noyau magnétique, et d'un collecteur réalisé en une matière isolante et portant deux bagues collectrices, chacune d'entre elles étant connectée à une extrémité du fil constituant l'enroulement inducteur, une diode étant branchée électriquement en parallèle sur l'enroulement, caractérisé en ce que la diode est disposée sur l'arbre de l'alternateur dans le collecteur à bagues collectrices.

La description suivante , donnée à titre d'exemple, et en regard des dessins annexés, fera mieux comprendre comment l'invention peut être obtenue, dessins selon lesquels :

   – La figure 1 représente un schéma du circuit de charge d'un alternateur, selon l'invention.

   – La figure 2 représente, un collecteur d'alternateur selon l'invention.

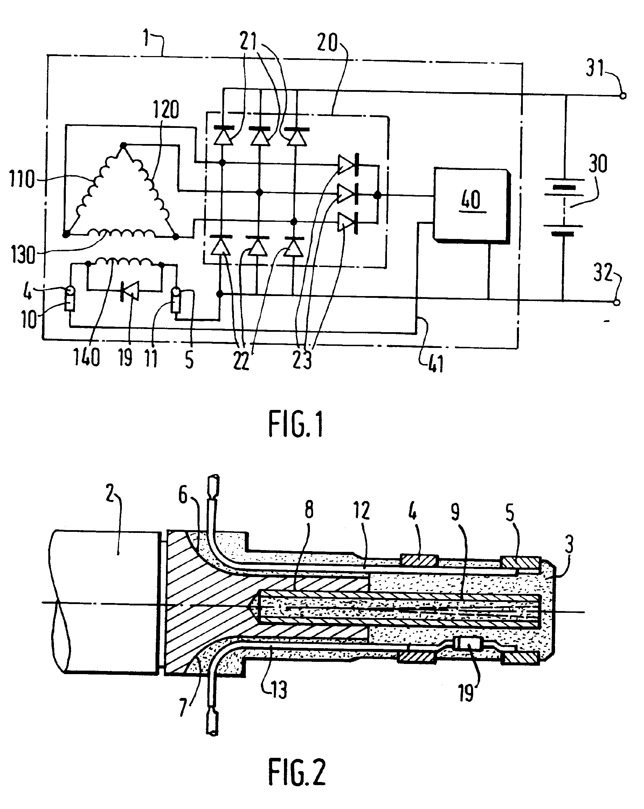

Selon la figure 1, un alternateur triphasé 1 comporte trois enroulements de phase 110, 120 et 130 et un enroulement inducteur 140. Ces trois enroulements de phase sont connectés à un pont de diodes triphasé 20 constitué des diodes 21 et 22 pour charger la batterie d'accumulateurs 30 et alimenter le réseau de bord du véhicule, branché entre les bornes 31 et 32. Trois diodes supplémentaires 23 forment un deuxième pont redresseur afin d'alimenter le régulateur 40, servant à réguler le débit de l'alternateur 1 en fonction de la demande, et ceci en agissant sur l'alimentation de l'enroulement inducteur 140.

L'inducteur 140 est alimenté par le régulateur 40 grâce à deux balais 10 et 11 frottant respectivement sur les bagues collectrices 4 et 5. Une diode de recirculation 19 est branchée en parallèle sur l'enroulement inducteur en aval des bagues collectrices 4 et 5 de manière à ce que son anode soit reliée à la masse et sa cathode soit reliée à la sortie 41 du régulateur 40.

Comme représenté sur la figure 2 illustrant un exemple de réalisation de l'invention un collecteur 3 est ménagé en bout d'arbre 2 d'un alternateur. Le bout de l'arbre 2 est aminci et comporte deux rainures 6 et 7 et une perforation axiale 8. Une goupille fendue 9 d'un diamètre supérieur au diamètre de la perforation axiale 8 y est emmanchée à force, de manière telle à ce que la goupille fendue 9 présente à son extrémité libre une certaine conicité.

Sur chacune des bagues collectrices 4 et 5 est soudé un fil de liaison, respectivement 13 et 12, et la diode 19 de recirculation est soudée entre lesdites deux bagues collectrices 4 et 5 en prenant garde à la polarité de ladite diode de recirculation 19. L'arbre 2 muni de sa goupille fendue 9 est disposé dans un moule, ainsi que les bagues collectrices 4 et 5 munies de leurs fils de liaison 13 et 12 et de leur diode de recirculation 19 avant d'y injecter une matière isolante qui constituera le collecteur 3.

## Revendications

1. Un rotor de machine dynamo-électrique et notamment d'alternateur (1) de véhicule automobile, généralement constitué d'un arbre (2) sur lequel sont disposés, un noyau magnétique portant une bobine industrice (140), deux roues polaires à griffes disposées en vis-à-vis de chaque côté du noyau magnétique, et d'un collecteur (3) réalisé en une matière isolante et portant deux bagues collectrices (4) et (5), chacune d'entre elles étant connectée à une extrémité du fil constituant l'enroulement inducteur (140), une diode (19) étant branchée électriquement en parallèle sur l'enroulement (140), caractérisé en ce que la diode (19) est disposée sur l'arbre (2) de l'alternateur (1) dans le collecteur à bagues collectrices (4) et (5).

2. Rotor, selon la revendication 1, caractérisé en ce que l'anode et la cathode de la diode (19) sont reliées directement et respectivement à chacune des bagues collectrices (4,5).

## Patentansprüche

1. Rotor für dynamo-elektrische Maschine und insbesondere für einen Fahrzeuggenerator (1), allgemein bestehend aus einer Welle (2), woran ein Magnetkern mit einer Erregerspule (140), zwei Polräder mit beiderseits des Magnetkerns gegenüber angeordneten Klemmen und einem Kollektor (3) aus Isoliermaterial und versehen mit zwei Schleifringen (4) und (5), von denen jede mit einem Ende des die Erregerwicklung (140) bildenden Drahts verbunden ist, während eine Diode (19) elektrisch parallel zur Wicklung (140) geschaltet ist, **dadurch gekennzeichnet,** daß die Diode (19) an der Welle (2) des Generators (1) in dem mit Schleifringen (4) und (5) versehenen Kollektor angeordnet ist.

2. Rotor nach Anspruch 1, **dadurch gekennzeichnet,** daß die Anode und die Kathode der Diode (19) direkt jeweils mit einem der Schleifringe (4, 5) verbunden sind.

## Claims

1. A rotor for a dynamo-electric machine, and in particular for an alternator (1) of a motor vehicle, generally comprising a shaft (2) on which are disposed a magnetic core carrying an inductive winding (140), two interlocking pole wheels disposed facing each other on either side of the magnetic core, and a collector (3) formed from an insulating material and carrying two slip rings (4) and (5), each of the latter being connected to one end of the wire constituting the inductive winding (140), a diode (19) being electrically connected in parallel with the winding (140), characterised in that the diode (19) is disposed on the shaft (2) of the alternator (1) in the collector having slip rings (4) and (5).

2. A rotor according to Claim 1, characterised in that the anode and the cathode of the diode (19) are connected directly and respectively to each of the slip rings (4, 5).

FIG.1

FIG.2